(19)

Europäisches
Patentamt
European
Patent Office
Office européen
des brevets

(11) **EP 2 765 775 A1**

(12) **EUROPEAN PATENT APPLICATION**

(43) Date of publication:
**13.08.2014 Bulletin 2014/33**

(51) Int Cl.:
***H04N 13/00*** (2006.01)

(21) Application number: **13154257.3**

(22) Date of filing: **06.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Koninklijke Philips N.V.**
**5656 AE Eindhoven (NL)**

(72) Inventors:
• **Bruls, Wilhelmus Hendrikus Alfonsus**
**5600 AE Eindhoven (NL)**
• **Wildeboer, Meindert Onno**
**5600AE Eindhoven (NL)**

(74) Representative: **Damen, Daniel Martijn**
**Philips**
**Intellectual Property & Standards**
**P.O. Box 220**
**5600 AE Eindhoven (NL)**

(54) **System for generating intermediate view images**

(57)     A method (700) is disclosed for generating a series of intermediate images (721) from a stereo image (701). The stereo image (701) comprises a left image (101) corresponding to a left viewpoint and a right image (102) corresponding to a right viewpoint. The series of intermediate images (721) correspond to spatially consecutive viewpoints in a viewpoint range that comprises at least one of the left viewpoint and the right viewpoint. The method (700) comprises determining (710) a target viewpoint (711) based on predicted image quality of the series of intermediate images (721) corresponding to spatially consecutive viewpoints centered at the target viewpoint (711), and generating (720) the series of intermediate images (721) from the stereo image (701) for spatially consecutive viewpoints centered at the target viewpoint (711).

Fig. 7

**Description**

FIELD OF THE INVENTION

The invention relates to generating a series of intermediate images from stereo data.

Stereo image is a common representation for three-dimensional (3D) image data. A stereo image comprises a left image corresponding to a left viewpoint and a right image corresponding to a right viewpoint. Using a stereo display means for viewing the stereo image, a viewer's left eye sees the left image and the viewer's right eye sees the right image, causing the perception of a 3D image in the viewer.

Using a multi-view display, a 3D image is shown by means of a series of images corresponding to respective spatially consecutive viewpoints. Each of the multiple views of the multi-view display shows an image corresponding to one of the viewpoints in the spatially consecutive viewpoints. Accordingly, when the input image is a stereo image, showing the 3D image on a multi-view display requires generating a series of intermediate images from the stereo image. The series of intermediate images correspond to respective spatially consecutive viewpoints positioned in a viewpoint range typically comprising at least one of the left viewpoint and the right viewpoint.

BACKGROUND OF THE INVENTION

US2011/00268009 A1 describes a method for generating intermediate-view pixel data from different viewpoints using left and right image pixel data image and a disparity map for autostereoscopic 3D TV displays. The method computes a left image disparity map and a right image disparity map, using the left image and a right image. The method then generates a first intermediate-view pixel data and a second intermediate-view pixel data for the intermediate viewpoint. The first intermediate-view pixel data is generated from the left image pixel data and the left image disparity map. The second intermediate-view pixel data is generated from the right image pixel data and the right image disparity map. The intermediate-view pixel data is then generated by combining the left intermediate-view pixel data and the right intermediate-view pixel data. By repeating this process for different (multiple) intermediate viewpoints, multi-view three-dimensional image pixel data is generated from the left image pixel data and the right image pixel data.

The image quality of the intermediate-view pixel data varies with the intermediate viewpoint and with the stereo content, being the content of the left image and the right image. Visible image artifacts that affect the image quality are image detail artifacts (blur or ghosting) and occlusion artifacts. Detail artifacts are typically visible for intermediate viewpoints in between the left viewpoint and the right viewpoint and for a stereo image containing much detail. Occlusion artifacts are typically visible for lateral intermediate viewpoints, thus at the left of the left viewpoint and at the right of the right viewpoint, and for a stereo image containing large depth transitions.

The viewpoint range comprises intermediate viewpoints between the left viewpoint and the right viewpoint. As described above, for some stereo content, the intermediate-view pixel data (i.e. intermediate images) corresponding to respective intermediate viewpoints in this viewpoint range do not have a high image quality. A drawback of the prior art method is that the image quality of the intermediate-view pixel data for intermediate viewpoints in the viewpoint range is thus not high for various stereo content.

SUMMARY OF THE INVENTION

It is an object of the invention to provide a method for generating a series of intermediate images from a stereo image, the intermediate images having improved image quality.

The invention discloses a method for generating a series of intermediate images from a stereo image, the stereo image comprising a left image corresponding to a left viewpoint and a right image corresponding to a right viewpoint, the series of intermediate images corresponding to spatially consecutive viewpoints in a viewpoint range that comprises at least one of the left viewpoint and the right viewpoint, the method comprising: determining a target viewpoint based on predicted image quality of the series of intermediate images corresponding to spatially consecutive viewpoints centered at the target viewpoint; and generating the series of intermediate images from the stereo image for spatially consecutive viewpoints centered at the target viewpoint.

Determining a target viewpoint comprises predicting the image quality for a series of intermediate viewpoints centered at the target viewpoint, the series of intermediate viewpoints being spatially consecutive viewpoints. A viewpoint range is defined by the first and the last of the series of intermediate viewpoints, and the position of the series of intermediate viewpoints is determined by the target viewpoint, being the intermediate viewpoint at the center of the viewpoint range. In the event of an even number of views in the series of intermediate viewpoints, the target viewpoint thus corresponds to a "virtual" viewpoint between the two center views, whereas in the event of an odd number of views in the series of intermediate viewpoints, the target viewpoint corresponds to that of the center view.

The target viewpoint used for centering the series of intermediate viewpoints is determined by the predicted image quality of the corresponding series of intermediate images. Predicting the image quality of the series of intermediate images may comprise predicting the visibility of image detail artifacts based on the detected image detail in the stereo image, or may predicting the visibility of occlusion artifacts based on detected disparity/depth transitions in disparity data corresponding to the stereo image. Determining the target viewpoint may also comprise retrieving a pre-computed target viewpoint from meta-data coupled to the stereo image.

The series of intermediate images is generated for the respective series of intermediate viewpoints centered at the target viewpoint. An intermediate image is generated from the stereo image for each viewpoint in the series of intermediate viewpoint, and thus the series of intermediate images is generated.

System arranged for generating a series of intermediate images from a stereo image, the stereo image comprising a left image corresponding to a left viewpoint and a right image corresponding to a right viewpoint, the series of intermediate images corresponding to spatially consecutive viewpoints in a viewpoint range that comprises at least one of the left viewpoint and the right viewpoint, the system comprising: a determining unit for determining a target viewpoint based on predicted image quality of the series of intermediate images corresponding to spatially consecutive viewpoints centered at the target viewpoint; and a generating unit for generating the series of intermediate images from the stereo image for spatially consecutive viewpoints centered at the target viewpoint.

The effect of the invention is that the series of intermediate images has a high image quality. In the context of the invention 'high image quality' relates to an image comprising few or no visible image artifacts.

**BRIEF DESCRIPTION OF THE DRAWINGS**

These and other aspects of the invention are apparent from and will be elucidated with reference to the embodiments described hereinafter.

In the drawings,

FIG.1a illustrates a method for generating an intermediate image from stereo data,
FIG.1b illustrates a policy determining process determining a mixing policy in an off-line manner,
FIG.1c illustrates a policy determining process that uses a detection of image detail,
FIG. 2 illustrates multiple views of a multi-view display,
FIG. 3a illustrates a linear mixing policy,
FIG. 3b illustrates two nonlinear mixing policies,
FIG. 4 illustrates three consecutive scenes of a stereo view video sequence comprising stereo video frames,
FIG.5 illustrates, in each of six subfigures, a multiview display comprising multiple display views corresponding to a series of intermediate viewpoint centered at a target viewpoint,
FIG.6 illustrates a system, in three configurations, for generating an intermediate image from stereo data and a display for showing the intermediate image, and
FIG.7 illustrates a method for generating a series of intermediate images from a stereo image.

It should be noted that items which have the same reference numbers in different figures, have the same structural features and the same functions, or are the same signals. Where the function and/or structure of such an item has been explained, there is no necessity for repeated explanation thereof in the detailed description

DETAILED DESCRIPTION OF EMBODIMENTS

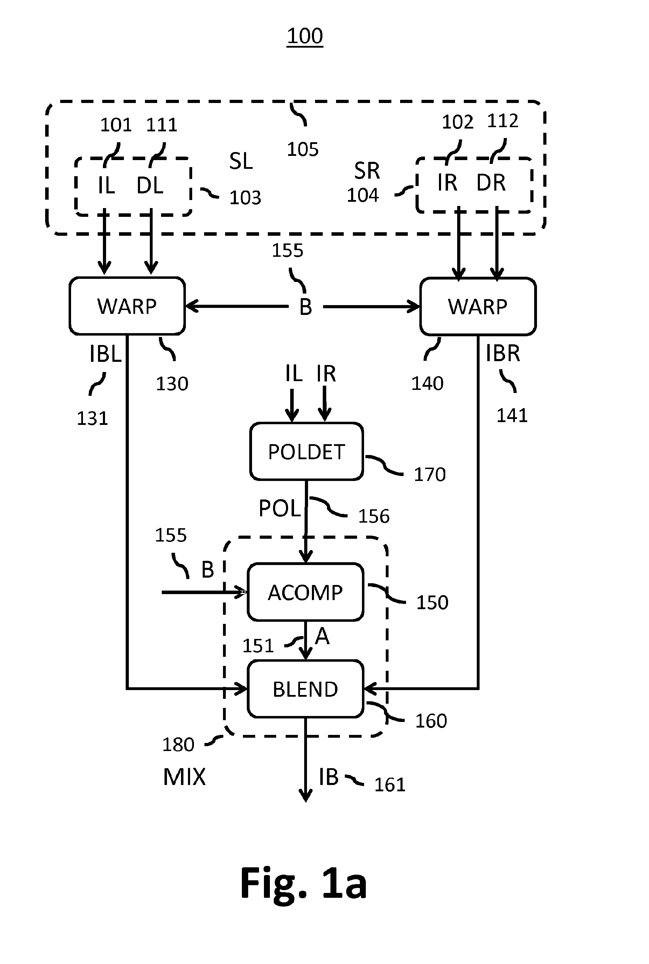

FIG.1a illustrates a method for generating an intermediate image from stereo data. 105. Output of the method is an intermediate image IB 161 corresponding to an intermediate viewpoint B 155. The intermediate viewpoint B 155 refers to a viewpoint at relative position in the range of viewpoint, wherein the range typically comprises the left viewpoint and the right viewpoint, and at least comprises one of the left viewpoint and the right viewpoint. Input of the method is stereo data comprising a left data SL 103 and a right data SR 104. The left data SL comprises a left image IL 101 and left disparity DL data 111. The right data SR comprises a right image IR 102 and right disparity data DR 112.

As will be clear to those skilled in the art, depth is inversely proportional to disparity, however the actual mapping of depth to disparity in display devices is subject to various design choices such as, the total amount of disparity that may be generated by the display, the choice of allocating a particular depth value to zero disparity, the amount of crossed disparity allowed, etc. However, the depth data which is provided with the stereo data and/or which is derived from the input stereo data, is used to warp images in a depth dependent manner. Therefore disparity data is here qualitatively interpreted as depth data.

A warping process WARP 130 generates a left intermediate image IBL 131 from three inputs: (i) the left image IL, (ii) the left disparity data DL, and (iii) an intermediate viewpoint B 155. The left warping process WARP 130 effectively generates the left intermediate image IBL, using the left disparity data DL to 'warp' the left image IL to the intermediate viewpoint B. Likewise, a warping process WARP 140 generates a right intermediate image IBR 141 from the right image IR, the right disparity data DR, and the intermediate viewpoint B. An example of such a warping process that uses depth/disparity for image-based rendering is disclosed in US 5,929,859. A more complex example of warping is presented in US 7,689,031.

A mixing process MIX 180 performs a mixing of the left intermediate image IBL and the right intermediate image IBR. The mixing depends on the intermediate viewpoint B, and on a mixing policy POL 156 that describes how the mixing depends on the intermediate viewpoint B. Output of the mixing process MIX is the intermediate image IB 161. A policy determining process POLDET 170 determines the mixing policy POL based on the stereo image, i.e. based on the left image IL and the right image IR.

Optionally, the method comprises a disparity computing process that computes the left disparity data DL and the right disparity data DL from the left image IL and the right image IR. Examples of depth/disparity estimation algorithms are known to those skilled in the art of 3D video processing, examples of such algorithms are provided in US6,625,304 and US6,985,604. Optionally, the warping processes WARP 130 and WARP 140 generates an intermediate image using pre-computed disparity data obtained from a stereo view video sequence, wherein each stereo view video frame comprises a stereo image as well as corresponding disparity data.

The mixing process MIX is composed of a factor computing process ACOMP 150 and of a blending process BLEND 160 as depicted in FIG 1a. The factor computing process ACOMP 150 computes a mixing factor A from the intermediate viewpoint B and the mixing policy POL, wherein the mixing policy POL describes how the mixing factor A depends on the intermediate viewpoint B. The factor computing process ACOMP computes a mixing factor A from the intermediate viewpoint B according to the mixing policy POL. The blending process BLEND then generates the intermediate image IB by mixing the intermediate images IBL and IBR, using the mixing factor A. Optionally, the blending process BLEND comprises a technique commonly known as 'alpha blending', which is further described below.

The mixing policy POL describes how the mixing of the intermediate images IBL and IBR depends on the intermediate viewpoint B. The policy determining process POLDET determines a mixing policy POL such that the mixing process MIX generates an intermediate image IB with high image quality. Processing POLDET predicts the impact of a mixing policy on the image quality of the intermediate image IB, using knowledge about the impact of a mixing policy on the image quality of the intermediate image generated by the mixing. In other words, the policy determining processing POLDET predicts the image quality of the intermediate image for each of several mixing policies and for a given stereo image content, and then determines from the several mixing policies which mixing policy POL will generate an intermediate image with high image quality.

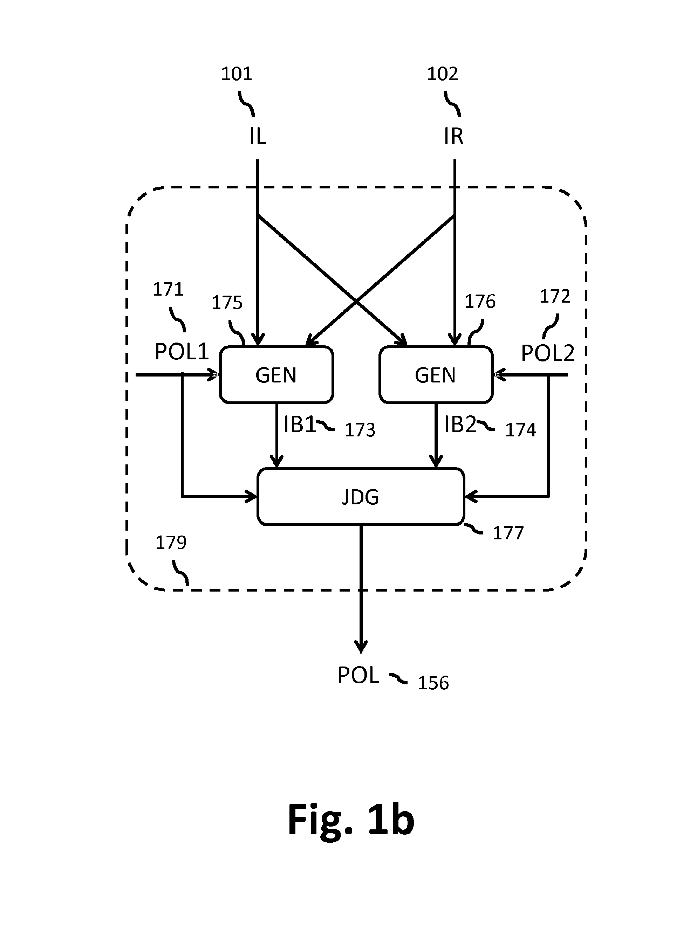

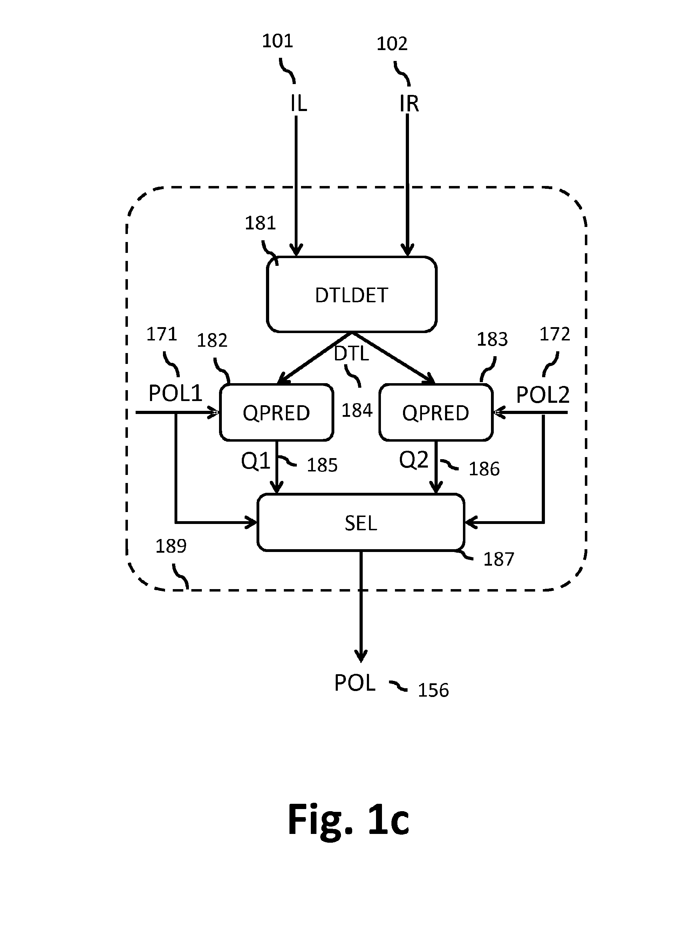

Optionally, the mixing policy process POLDET determines a mixing policy POL from meta-data comprising the mixing policy, wherein the meta-data is comprised by the stereo data. For example, the meta-data is produced off-line by an algorithm that (1) generates intermediate images from the stereo data using the method of FIG.1 using various mixing policies, (2) measures the image quality of the generated intermediate images, (3) determines the generated intermediate image having the high image quality, and (4) determines the mixing policy corresponding to the generated intermediate image having the high image quality.

FIG.1b illustrates a policy determining process determining a mixing policy in an off-line manner. The mixing policy determining process 179 receives the stereo image as input, i.e. the left image IL 101 and the right image IR 102. A first intermediate image IB1 173 is generated by a generating method GEN 175 using a first mixing policy POL1 171 and the stereo image. Likewise, a second intermediate image IB2 174 is generated by a generating method GEN 176 using a second mixing policy POL2 172 and the stereo image. The generating methods GEN 175, 176 employ the method of FIG.1a for generating an intermediate image, using the respective mixing policies POL1 and POL2. The generating methods GEN 175, 176 select an intermediate viewpoint to generate an intermediate image to be used for measuring its image quality. In a judging process JDG 177, one or more viewers judge the image quality of the intermediate images IB1,IB2, and select one of the intermediate images IB1,IB2 having an image quality that is judged as high. The mixing policy corresponding to the intermediate image having high image quality is then determined as the mixing policy POL 156. For example, if the intermediate image IB1 is judged to have a high image quality in comparison to the second intermediate image IB2, then the mixing policy POL is determined as the second mixing policy POL2, thus POL=POL2. Optionally, the judging process JDG is not performed by viewers but instead performed automatically by an algorithm that quantifies and judges the image quality of the intermediate images IB1 and IB2.

Optionally, the policy determining process 179 of FIG.1b determines the mixing policy 156 based on the image quality of multiple intermediate images for each of the policies POL1 and POL2. The generating processes GEN 175,176 each generate multiple intermediate images IB1 and IB2 for a respective multiple views. The judging process JDG then judges an average image quality of the multiple intermediate images IB1, and judges an average image quality of the multiple intermediate images IB1, and selects the multiple intermediate images having an average image quality that is judged as high. The mixing policy corresponding to the intermediate image having high average image quality is then determined as the mixing policy POL 156.

Alternatively, the policy determining process POLDET comprises a detection of the presence of image detail in the stereo image, and uses the detected presence in the determining of a mixing policy. When using some mixing policies, the image quality of image details in the generated intermediate image is higher than when using other mixing policies. Inaccuracies in the disparity data DL,DR lead to inaccurately generated image details in the respective intermediate images IBL,IBLR. Mixing of the inaccurately generated image details from the intermediate images IBL, IBR therefore leads to artifacts in the intermediate image IB that result from the mixing. The artifacts comprise detail blur, i.e. loss of detail sharpness, and/or ghosting, i.e. double appearance of image details. These artifacts appear less when mixing is performed according to a mixing policy that defines a mixing using predominantly one of the intermediate images. However, using predominantly one of the intermediate images in turn leads to occlusion artifacts. Therefore, the mixing policy that defines a mixing using predominantly one of the intermediate images is only determined if the stereo image comprises sufficient image detail, such that occlusion artifacts affect the image quality less than detail blur artifacts.

FIG.1c illustrates a policy determining process that uses a detection of image detail. The policy determining process 189 illustrates how the mixing policy POL 156 is determined based on a detected presence of image detail in the stereo data. The mixing policy determining process 189 receives the stereo image as input, i.e. the left image IL 101 and the right image IR 102. A process DTLDET 181 comprises a detail detection algorithm that detects image detail DTL 184 in the stereo image. A quality predicting process QPRED 182 receives the detected image detail DTL and a first mixing policy POL1 171, and determines the predicted image quality Q1 185 of an intermediate image that would be generated using the first mixing policy POL1. A quality predicting process QPRED 183 receives the detected image detail DTL and a second mixing policy POL2 172, and determines the predicted image quality Q2 186 of an intermediate image that would be generated using the second mixing policy POL2. The quality predicting processes QPRED 182,183 predict image quality using statistical knowledge about the impact of the mixing policies POL1, POL2 on the image quality of intermediate images generated using the mixing policies POL1, POL2. A process SEL 187 determines one of the predicted image qualities Q1, Q2 as being high, and determines the mixing policy corresponding to the high predicted image quality as the mixing policy POL 156. For example, if the predicted image quality Q2 is high compared to the predicted image quality Q1, then the mixing policy POL is determined as the second mixing policy POL2, thus POL=POL2. The predicted image qualities Q1 and Q2 may each be represented by a single value, whereas the higher of the two predicted image qualities Q1,Q2 is determined as being high.

Optionally, the detail detection algorithm uses only one of the left image and the right image of the stereo image.

Optionally, the determining of the predicted of image quality is based on occlusion artifacts. For example, in an analogous manner to using a detail detection algorithm, the process determining process uses a disparity transition detection algorithm that receives at least one of the disparity data DL, DR and that detects large transitions in disparity. Using statistical knowledge about the impact of the disparity transitions on the image quality of intermediate images generated with various mixing policies, the policy determining process determines a mixing policy. Note that this example implies that the policy determining process receives at least one of the disparity data DL, DR.

Optionally, the determining mixing processes 179,189 of the figures FIG.1b and FIG.1c determine the mixing policy from a plurality of mixing policies, wherein the plurality of mixing policies comprises more mixing policies than two mixing policies POL1 and POL2. For example, the plurality comprises three additional mixing policies POL3, POL4 and POL5.

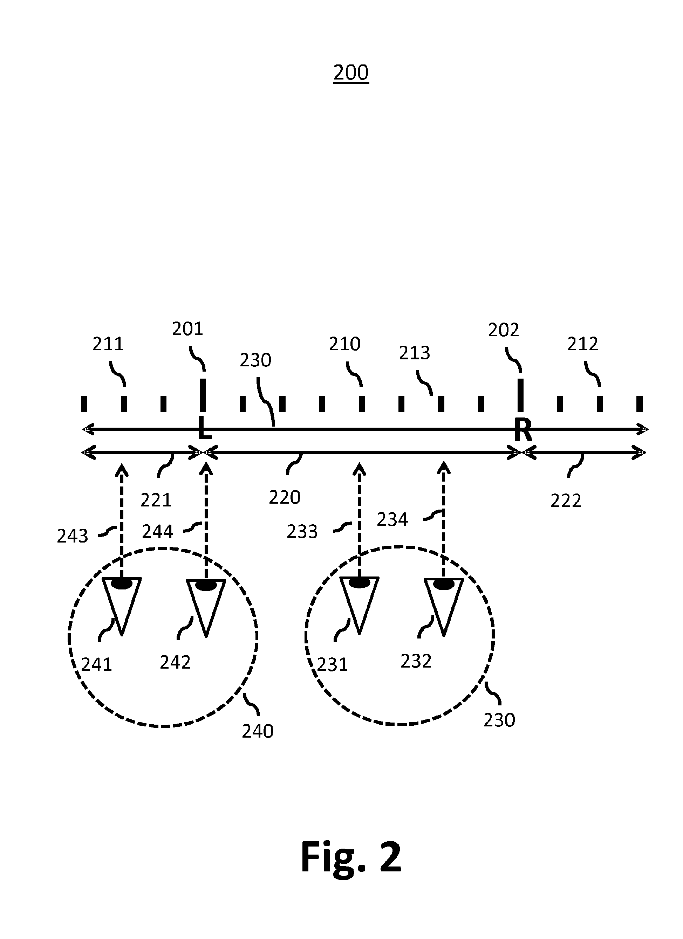

In what follows, the impact, in terms of image quality, of a mixing policy on the generating of an intermediate image is explained using FIG.2.

FIG. 2 illustrates multiple viewpoints corresponding to views of a multi-view display. The multiple viewpoints are indicated as vertical stripes, forming a horizontally adjacent series of views. For each viewpoint, the multi-view display shows a corresponding intermediate image IB. Several viewpoints are indicated by numbers 201, 202, and 210-213. All viewpoints lie in a viewpoint range 230. The original viewpoints of the stereo images are indicated as a left viewpoint L 201 and a right viewpoint R 202. The viewpoint range 230 is divided into three parts: (i) a central viewpoint range 220, (ii) a left lateral viewpoint range 221, and (iii) a right lateral viewpoint range 222. Viewpoint 210 is a central stereo viewpoint positioned halfway in between the left viewpoint L and the right viewpoint R. In contrast, viewpoint 211 and 212 lie in the lateral viewpoint ranges 221 and 222, respectively.

The view configuration as shown in Fig. 2 represents an example view configuration as may result from the use of a lenticular-based or barrier-based autostereoscopic display. An example of such a lenticular-based multi-view display is disclosed in US6,064,424.

In what follows in the explanation of FIG.2, a typical mixing policy is used that (a) defines a mixing using both intermediate images IBL, IBR for viewpoints in the central viewpoint range 230, (b) defines a mixing using only the left intermediate image IBL for views in the left lateral viewpoint range 211, and (c) defines a mixing using only the right intermediate image IBR for views in the right lateral viewpoint range 212. A mixing comprises adding a relative contribution of the left intermediate image IBL and a relative contribution of the right intermediate image IBR.

For views in the central viewpoint range 230, both of the intermediate images IBL and IBR are mixed into an intermediate image IB, wherein a relative contribution of the left intermediate image IBL to the mixing is large for a viewpoint near to viewpoint L and is low for a viewpoint far from viewpoint L, and wherein, consequently, a relative contribution of the right intermediate image IBR to the mixing is large for a viewpoint near to viewpoint R and low for a viewpoint far from viewpoint R.

At the left lateral viewpoint range 221 including the left viewpoint L, the relative contribution of the left intermediate image IBL is 100% and the relative contribution of the right intermediate image IBR is 0%, so that the mixing process simply copies the intermediate left image IBL to its output IB, thus IB=IBL. This implies that intermediate images at the left lateral views are generated only by the warping process WARP 130, and are thus effectively extrapolated from the left original image IL. In the specific case of the left viewpoint L, the warping process WARP 130 simply copies the input IL to its output IBL, so that IBL=IL and thus IB=IBL=IL, which implies that the original left image IL is shown at viewpoint L.

At the right lateral viewpoint range 222 including the right viewpoint R, the relative contribution of the right intermediate image IBR is 100% and the relative contribution of the left intermediate image IBL is 0%, so that the mixing process simply copies the intermediate right image IBR to its output IB, thus IB=IBR. This implies that intermediate images at the right lateral views are generated only by the warping process WARP 140, and are thus effectively extrapolated from the right original image IR. In the specific case of the right viewpoint R, the warping process WARP s140 simply copies the input IR to its output IBR, so that IBR=IR and thus IB=IBR=IR, which implies that the original right image IR is shown at viewpoint R.

FIG. 2 schematically shows a viewer 230 with a left eye 231 seeing an intermediate image at viewpoint 210, and with a right eye 232 seeing an intermediate image at viewpoint 213. The views 210 and 213 are situated in the central viewpoint range 220, thus between the original views L and R, so that each of the viewer's eyes, 231 and 232, sees an intermediate image generated by the mixing of the intermediate images IBL and IBR. The mixing, for views in the central viewpoint range 220, has a benefit and a drawback in terms of image quality of the intermediate images. The benefit is that occlusion artifacts are not notably present in the intermediate images, but the drawback is that image details in the intermediate images suffer from blurring and ghosting. The benefit is due to the mixing effectively being an interpolating between the intermediate images, IBL and IBR, and consequently the (interpolated) intermediate images do not comprise notable occlusion artifacts. The drawback is due to inaccuracies in the disparity data DL and DR, and is explained as follows. A single data value in the left disparity data DL comprises a pixel distance between (1) a pixel position of an image detail in the original left image IL, and (2) a corresponding pixel position of the same image detail in the original image IR. The left disparity data DL is used by the warping process WARP 130 to generate the left intermediate image IBL, at intermediate viewpoint B, from the original left image IL. The right disparity data DR is used by the warping process WARP 140 to generate the right intermediate image IBR, at viewpoint B, from the original right image IR. Inaccuracies in the disparity data DL,DR therefore cause image details to be generated at incorrect pixel locations of the intermediate images IBL and IBR, and consequently the mixing of image details of the intermediate images IBL and IBR typically result a generating of an intermediate image IB comprising the image details that suffer from blurring or ghosting artifacts.

FIG. 2 schematically shows a viewer 240 with a left eye 241 seeing an intermediate image at viewpoint 211, and a right eye 242 seeing an intermediate image at viewpoint 201. The right eye 242 thus sees the original left image, which by definition has a high image quality. In contrast, the left eye 241 sees an intermediate image that was generated at the left lateral intermediate viewpoint 211 from the original left image IL, and is effectively extrapolated from the original left image. The intermediate image at viewpoint 211 has a benefit and a drawback in terms of image quality. The benefit is that image details do not suffer from blurring or ghosting of image details. The drawback is the appearance of occlusion artifacts, due to the extrapolation from only the left image. The same benefit and drawback hold for a right lateral viewpoint, such as the viewpoint 212.

In an embodiment of the invention, the mixing policy used in the generating of an intermediate image adapts to the content of the original stereo data. For stereo images comprising much detail, the policy determining process POLDET determines a mixing policy that defines a mixing using only one of the intermediate images IBL and IBR, rather than using both of the intermediate images IBL and IBR. As a first example of the embodiment, a mixing policy defines a mixing that simply copies the left intermediate image IBL to the intermediate image IB, for all intermediate views in the viewpoint range 230. As a second example of the embodiment, a mixing policy defines that a mixing that simply copies the right intermediate image IBR to the intermediate image IB, for all intermediate views in the viewpoint range 230. As a third example of the embodiment, a mixing policy defines a mixing that copies the intermediate image IB from (a) the left intermediate image IBL for views at the left of the central stereo viewpoint 210 and from (b) the right intermediate image IBR for views at the right of the central stereo viewpoint 210. In the case that the original stereo image comprises little image detail so that blurring of image detail is not notably visible, a mixing policy is determined that defines a mixing that uses both of the intermediate images IBL, IBR.

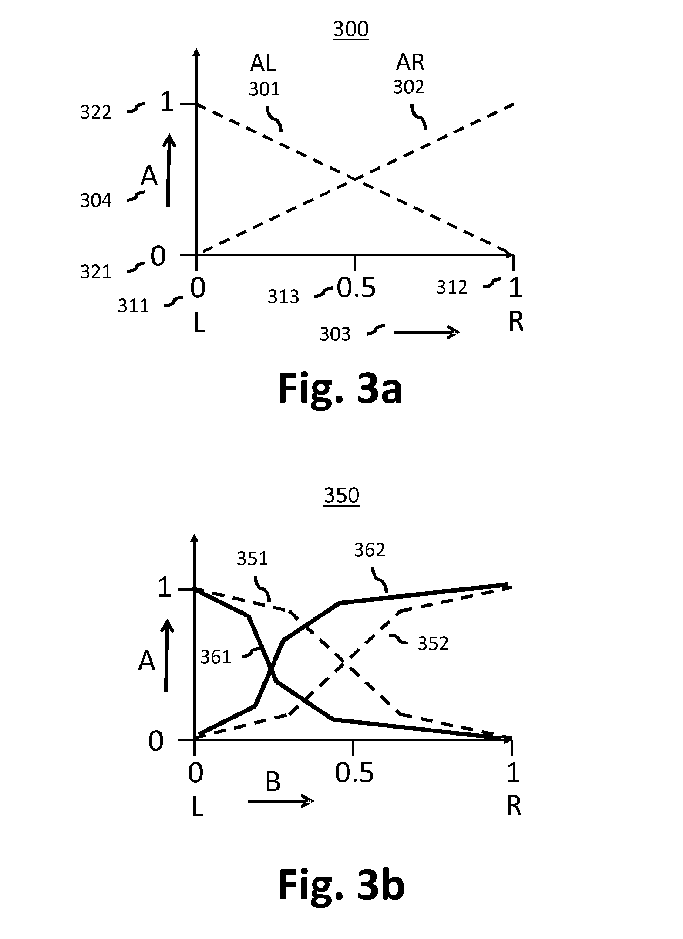

In what follows, the mixing process MIX 180 comprising a blending process BLEND and the factor computing process ACOMP. FIGs.3a and 3b illustrate mixing policies defining mixing factors for mixing of the two intermediate image data IBL and IBR.

FIG. 3a illustrates a linear mixing policy. The two curves AL 301 and AR 302 combined represent a single mixing policy. Curves AL 301 and AL 302 describe how a mixing factor A 304 depends on an intermediate viewpoint B 303. A curve AL 301 describes a mixing factor corresponding to the left intermediate image IBL, and a curve AR 302 describes a mixing factor corresponding to the right intermediate image IBR. The mixing factors of curves AL and AR are complementary and add up to a total of one, i.e. AL+AR=1. The mixing factors AL and AR linearly depend on the intermediate viewpoint B. Note that a tick mark 311 at value B=0 corresponds to the original left viewpoint L, a tick mark 312 at value B=1 corresponds to the original right viewpoint R, and a tick mark 313 at value B=0.5 corresponds to a central stereo viewpoint, e.g. the viewpoint 210 in FIG.2. An example of the mixing in blending process BLEND is a mixing according to alpha blending, which is performed as follows:

$$IB = AL*IBL + AR * IBR,$$

wherein AL+AR = 1.

In FIG.3a and 3b, an intermediate image IB at the original viewpoint L equals the original left image IL at B=0, thus IB=IBL=IL. An intermediate image IB at the original viewpoint R equals the original right image IR at B=1, thus IB=IBR=IR. An intermediate image IB at the central viewpoint, thus at B=0.5, equals the average of the intermediate image IBR and IBL, thus IB=0.5*IBL+0.5*IBR.

Note that the mixing factor AL represents a relative contribution of the left intermediate image IBL in the mixing, and that the mixing factor AR represents a relative contribution of the right intermediate image IBR in the mixing. The mixing factor in this context is commonly also referred to as 'blend factor'.

Note that the mixing policies for the lateral viewpoint ranges, thus for B < 0 and for B > 1, are not indicated in FIGs.3a. It is therefore hereby implied that AL=1 for views in the left lateral viewpoint range, thus for B <0, and that AL=0 for views in the right lateral viewpoint range, thus for B > 1. Consequently, AR=0 for views in the left lateral viewpoint range, and AR=1 for views in the right lateral viewpoint range.

FIG. 3b illustrates two nonlinear mixing policies. Curves 351 and 352 are similar to the respective curves AL 301 and AL 302 of FIG.3a, with the difference that curves 351 and 352 depend in a nonlinear manner on the intermediate viewpoint B. The curves 351 and 352 present an alternative to the linear curves of FIG.3a. The effect of the nonlinear mixing policy using curves 351, 352 is that the relative contribution in the mixing by the left intermediate image IBL is larger for views at the left of the central stereo viewpoint, when using the nonlinear curve 351 as compared to using the linear curve 301. Likewise, the relative contribution in the mixing by the right intermediate image IBR is larger for views at the right of the central viewpoint, when using the nonlinear curve 352 as compared to using the linear curve 302.

Fig. 3b also shows an asymmetric nonlinear mixing policy. The nonlinear asymmetric curves 361,362 are similar to the respective curves 351,352 in the sense of a nonlinearity, but are different in the sense of an asymmetry. As curve 362 is on average larger than curve 361, the curves 361,362 show that the mixing factor is on average higher for the right intermediate image IBR. Consequently, at the central stereo viewpoint, i.e. at B=0.5, the relative contribution of the right intermediate image IBR to the intermediate image IB (curve 362) is larger than the relative contribution of the left intermediate image IBL to the intermediate image IBL (curve 361). In other words, the relative contribution of the right intermediate image IBR in the mixing is dominant over the relative contribution of the left intermediate image IBL in the mixing.

The left-right asymmetry in the curves of FIG.3b is controlled by an asymmetry parameter ParA, such that the asymmetry in the curves may be increased or decreased by means of changing the asymmetry parameter ParA.

**[0050]** By increasing the asymmetry of curves 361 and 362 further, the crossing of the curves 361 and 362 will shift even more towards the left, thus toward B=0, and therefore curve 362 will tend, on average, even more towards A=1. Consequently, for an increasing number of views, the intermediate image IB will be generated using a large relative contribution of the right intermediate image IBR in the mixing, so that the intermediate image IB increasingly resembles the right intermediate image IBR and decreasingly resembles the left intermediate image IBL. By increasing the asymmetry parameter ParA to its largest positive value ParA=+1, the said relative contribution of the right intermediate image IBR becomes 1 for all intermediate views B. In other words, each intermediate image IB becomes a copy of the right intermediate image IBR, so that the intermediate image IB is generated using only the right image IR, the right disparity data DR and the intermediate viewpoint B. The latter case is also commonly known as 'rendering from image plus depth'.

Likewise, the asymmetry parameter ParA can be used to shift the asymmetry in the other direction, moving the crossing towards the right, i.e. thus toward B=1.0. Analogous to the previous example, increasingly shifting the said crossing to the right, the relative contribution of the left intermediate image IBL to the intermediate image IB increases further. By increasing the asymmetry parameter ParA to its largest negative value ParA=-1 said relative contribution of the left intermediate image IBL becomes 1 for all intermediate views B between B=0 and B=1. In other words, the intermediate image IB becomes a copy of the left intermediate image IBL, so that the intermediate image IB is generated using only the left image IL, the left disparity data DL and the intermediate viewpoint B.

For an asymmetry parameter ParA assuming a value nearer to zero, the curves in FIG.3b become less asymmetric, which corresponds to a mixing policy wherein said relative contributions of the intermediate images IBL and IBR become more equal. For one specific value of the asymmetry parameter, being ParA=0, the curves describe a symmetric nonlinear mixing policy, such as illustrated by the curves 351,352.

The asymmetry parameter is thus effectively a 'soft switch', that can be used to gradually switch the mixing policy and thereby gradually switch between (a) generating an intermediate image from both the left data and the right data, and (b) generating intermediate image from only one of the left data and the right data. The said gradual switching of a mixing policy will be elaborated further below in this document.

Optionally, the intermediate image is generated from stereo data comprised by a stereo view still image. Optionally, the intermediate image is generated from stereo data comprised by a stereo view frame of a stereo view video sequence.

Optionally, two intermediate images are generated to form the new left image and the new right image of a new stereo image, the new left image corresponding to a new left viewpoint, and the new right image corresponding to a new right viewpoint, wherein the new left viewpoint and the new right viewpoint differ from the original left viewpoint and right viewpoint, respectively. Such generation of two intermediate images is also commonly referred to as stereo-to-stereo conversion, and may be applied for reducing or amplifying the depth range of the stereo data. The new stereo image may be viewed on a dedicated stereo view display by a viewer using stereo view glasses.

Optionally, a series of intermediate images, corresponding to a horizontal series of views, is generated for viewing on a multi-view autostereoscopic display which is capable of simultaneously displaying the images in the series of intermediate images. The series typically comprises more than two views. For example, a multi-view autostereoscopic display comprises 9 views.

Optionally, a series of intermediate images is generated for a respective series of views from each frame of a stereo view video sequence. The series of views comprises consecutive intermediate views. The series of intermediate images is viewed, for example, on a multi-view autostereoscopic display.

Optionally, a stereo view video sequence comprises various scenes, and a single mixing policy is used within a scene. A scene comprises multiple consecutive stereo view video frames, and, in this case, the same mixing policy is used within the scene for generating an intermediate image from each stereo view video frame. The mixing policy used within the scene may differ from a mixing policy used within a subsequent scene. By using a scene change detector, the beginning of a next scene is detected and a next mixing policy is determined at the first frame of a new scene. Within the next scene, the next mixing policy is used. Rather than using a scene change detector, a scene change may be indicated by meta-data comprising scene change indicators, wherein the meta-data is included by the stereo view video sequence.

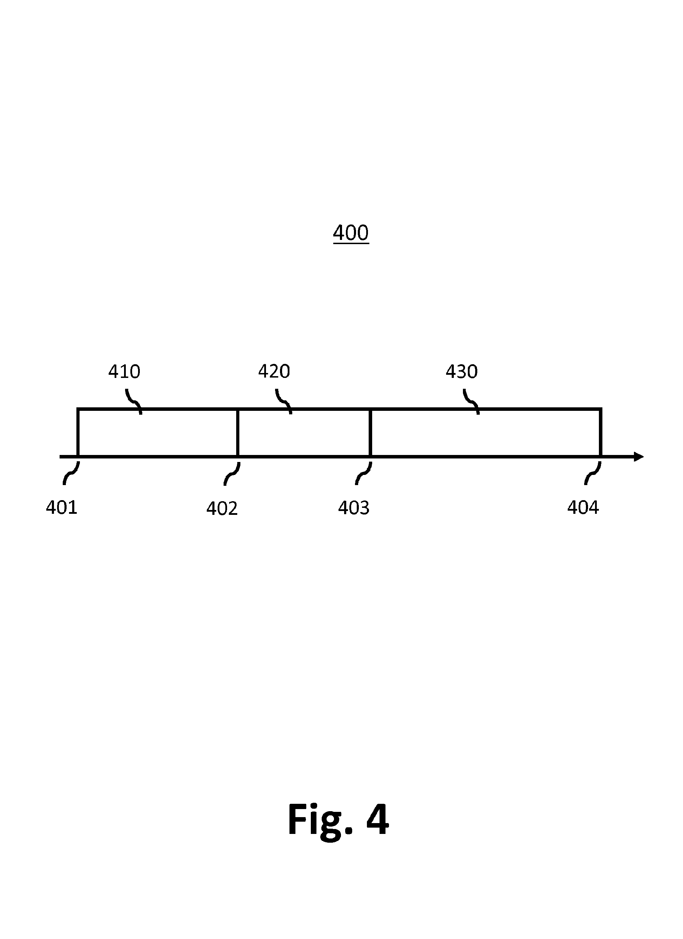

An overview of state-of-art scene detection, or shot transition detection methods, as well as an analysis of their workings, is available in: Alan F. Smeaton, "Video shot boundary detection: Seven years of TRECVid activity", Computer Vision and Image Understanding 114 (2010) 411-418, 2010, hereby incorporated by reference. FIG. 4 illustrates three consecutive scenes 410, 420 and 430 of a stereo view video sequence 400 comprising stereo video frames. The stereo video sequence consists of stereo video frames comprising a left image and a right image. The horizontal axis in FIG.4 represents a time axis. The sections 410, 420 and 430 each present a section of the stereo view video sequence, starting at (time) instance 401, 402 and 403 respectively, whereas section 430 ends at instance 404. Sections 410, 420 and 430 represent scenes, and instances 402 and 403 represent scene changes. The term 'scene' as used in the present context refers to the same matter as is commonly referred to by the term 'shot'.

The embodiment described hereinabove, wherein a single mixing policy is used within a scene, is further explained in the following example. Section 410 contains frames comprising much detail, and therefore a mixing policy is determined that defines a mixing using only the left intermediate image IBL. Section 420 contains little detail and therefore a mixing policy is determined that defines a mixing using both the left intermediate image IBL and the right intermediate image IBR, such as the mixing policy described by the curves FIG.3a. Like section 410, section 430 contains frames comprising much detail, and therefore a mixing policy is determined that defines a mixing using only the right intermediate image IBR. Scene changes are detected at instances 402 and 403 and consequently a new mixing policy is determined and used in the generating of the intermediate image IB.

As an additional example, adding to the previous example, a series of intermediate images, corresponding to a respective series of intermediate views, is generated from each stereo video frame, and the series of intermediate image is viewed on a multi-view autostereoscopic display.

Optionally, the determining of a mixing policy gradually changes within a scene of a stereo view video sequence. This is achieved with a mixing that uses the asymmetry parameter, as described above in the explanation of FIG.3b. Consider the following example. For generating from an early frame of a scene, a first mixing policy is determined (using ParA= -1), defining a mixing that uses only the left intermediate image IBL, thus effectively generating an intermediate image IB from only the (original) left data. For generating from a late frame of the scene, a second mixing policy is determined (using ParA = 0), defining a mixing that uses both of the two intermediate images, IBL and IBR, thus effectively generating an intermediate image IB from both the left data and the right data. Yet, to prevent sharp transitions in the intermediate image IB, the mixing policy is changed gradually from the first mixing policy to the second mixing policy for frames in between the early frame and late frame. By gradually changing the asymmetry parameter between two frames, a gradual changes is established in the mixing policy, and consequently the intermediate image changes gradually also. For frames in between the early frame and the later frame, the asymmetry parameter thus changes gradually from ParA = -1 for the early frame to ParA = 0 for the late frame.

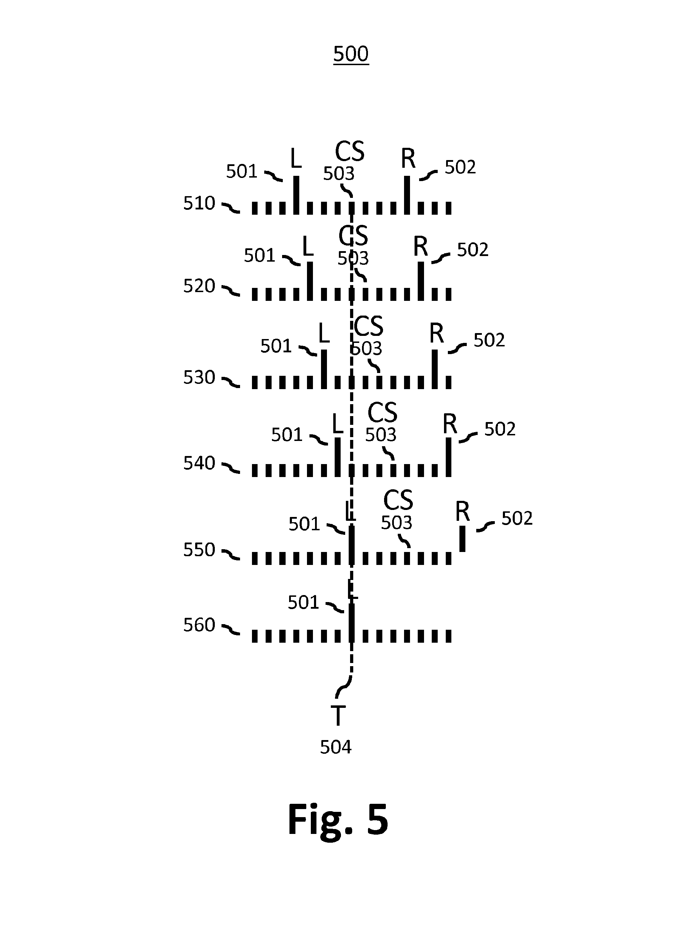

FIG.5 illustrates, in each of six subfigures, a multi-view display comprising multiple display views corresponding to a series of intermediate viewpoint centered at a target viewpoint T 504. Each of the subfigures 510-550 illustrates a multi-view display comprising a series of display views. At each display view, the display shows an intermediate image corresponding to an intermediate viewpoint, and therefore the series of display views effectively shows a series of intermediate viewpoints. The relative position of an intermediate viewpoint within the series of intermediate viewpoints remains the same in all subfigures, thus the intermediate viewpoints maintain their relative order in the series and their distance to their two neighboring intermediate viewpoints. The original stereo viewpoints L 501 and R 502 indicate where the left viewpoint and the right viewpoint reside within the series of intermediate viewpoints. The central stereo viewpoint CS 503 indicates the intermediate viewpoint that lies at the middle of viewpoint L and viewpoint R. The center element in the series of intermediate viewpoints is the target viewpoint T (see also dashed vertical line). The target viewpoint T may be any intermediate viewpoint between or near the original viewpoints L and R. It is inferred from views L, R and C to which intermediate viewpoint the target viewpoint T corresponds. Each of the subfigures 510-550 corresponds to a different target viewpoint T (except for subfigures 550 and 560, which correspond to the same target viewpoint T).

For example in subfigure 510, the target viewpoint T corresponds to the central stereo viewpoint CS. In contrast, in subfigure 550 the target viewpoint T corresponds to the original left viewpoint L. From each subfigure to the next subfigure, e.g. from 510 to 520, the target viewpoint shifts by one viewpoint. Therefore, the sequence of subfigures 510-550 shows a gradual shift of the target viewpoint T, i.e. from the central stereo viewpoint in subfigure 510 to the original left viewpoint in subfigure 550, shifting by one display view between subsequent subfigures. Between subfigure 550 and subfigure 560 the target viewpoint T is however not shifted, which will be used in an example below.

Optionally, the method of FIG.1 is used for generating a series of intermediate images from stereo data, and the target viewpoint T is determined such that the intermediate images have high image quality for a given content of the stereo data. Consider the following example, wherein the stereo data is comprised by a stereo video sequence, and wherein the mixing policy defines the same mixing for all frames. The mixing policy determines a mixing that uses both intermediate images, IBL and IBR, according to the mixing policy described by FIG.3a. In the context of this example, the subfigures 510-560 correspond to subsequent frames of a stereo view video sequence. Subfigure 510 corresponds to a situation wherein the multi-view display shows a series of intermediate images generated from a stereo video frame, referred to as frame 1 in this example. Likewise, the subfigures 520-560 correspond to respective frames 2-6. The policy detection process uses a detail detector to detect a presence of image detail and selects a target viewpoint T based on that detected presence. For frame 1, the system, using a detail detector, concludes that little detail is present so that detail artifacts are not visible, and therefore selects the central stereo viewpoint CS as the target viewpoint T. Consequently, the method generates intermediate images for a series of intermediate views wherein the central viewpoint of the series corresponds to the central stereo viewpoint CS. However, for frame 2, the system concludes that too much detail is present, and therefore concludes that high image quality is generated by using the left viewpoint L as the target viewpoint T, because, for example, detail artifacts are less visible for views near the original left viewpoint L than for views near the central stereo viewpoint CS. In order to prevent an instant transition in the intermediate images (e.g. such that the 3D image makes a sudden 'jump' which results in an unpleasant viewing experience) the target viewpoint T is not shifted in a single step to the left viewpoint L for generating the series of intermediate images from the second frame. Instead, a gradual shifting of the target viewpoint T toward the original left viewpoint L is performed during frames 2-5, completing the gradual shifting at frame 5.

Optionally, the system performs an instant shifting of the target viewpoint T between one frame and its next frame (as opposed to performing a gradual shifting), for example when a scene change is detected between the one frame and its next frame. As the content of the stereo video frame, as a whole, changes between the one frame and its next frame at a scene change, an instant change in target viewpoint T is not noticed by a viewer.

Optionally, the policy determining process determines a new mixing policy after completing a shifting of the target viewpoint T. For example, consider the gradual shifting during frame 1-5 as described hereinabove. For frame 6 (see subfigure 560) the mixing policy is changed to a new mixing policy, which defines, for example, a mixing using only the left intermediate image IBL (or in other words, effectively using 'image plus depth').

Optionally, in an analogous manner to the previous paragraph, the policy determining process determines a new mixing policy before initiating a shifting of the target viewpoint T. The new mixing policy does not change during the gradual shifting.

Optionally, the policy determining process gradually changes the mixing policy simultaneously with the gradual shifting. Consider the gradual shifting during frame 1-5, but wherein the mixing policy is a nonlinear asymmetric mixing policy controlled by the asymmetry parameter ParA (see also FIG.3b). At frame 1, a mixing is determined using both intermediate images IBL and IBR, such as described by curves 351-352 in FIG.3b. At frame 5, the mixing uses only the left intermediate image IBL. The mixing at frame 1, 2, 3, 4, 5 is defined by ParA = 0.0, -0.25, -0.5, -0.75, -1.0, respectively.

Optionally, the target viewpoint T is shifted at frames being several frames apart.For example, the target viewpoint T is shifted by one view once every 10 frames, making the gradual shift slower compared to shifting by one view at every frame.

Optionally, the target viewpoint T is shifted by a fraction of a view, or by more than one view.

Optionally, the target viewpoint T is determined by predicting the image quality for a plurality of target viewpoints T and selecting from the plurality of target viewpoints the one that corresponds to the highest image quality. The predicted image quality of a series of intermediate images is quantified by a predicted image quality parameter. For example, the plurality of target viewpoints T consist of 3 viewpoints: the original left viewpoint L, the original right viewpoint R, and the central stereo viewpoint CS. In this example, the stereo image contains much detail and the predicted image quality parameter for the central stereo viewpoint CS is consequently low (because visible detail artifacts are expected near the central stereo viewpoint), whereas the predicted image quality parameters for the original viewpoints, L and R, are high (because visible detail artifacts are not expected near the original viewpoint, L and R). In this case, the predicted image quality parameter for the original viewpoint L is the highest as compared to the predicted image quality parameters for the other two viewpoints, R and CS. The original viewpoint L is thus selected, and the series of intermediate viewpoints is centered at the original viewpoint L. In other words, the series of intermediate viewpoints lie in a region near the original viewpoint L.

Optionally, the predicted image quality parameter is computed as an average of a series of per-viewpoint predicted image quality parameters, wherein one per-viewpoint parameter is computed for each intermediate viewpoint in the series of intermediate viewpoints. The predicted image quality parameter for the series of intermediate viewpoints is then computed as the average of the per-viewpoint predicted image quality parameters.

Optionally, the predicted image quality parameter of the series of intermediate is computed as a per-viewpoint predicted image quality parameter for a single intermediate viewpoint in the series of intermediate viewpoints. For example, the single intermediate viewpoint is the target viewpoint T in the series of intermediate viewpoints. If the series of intermediate viewpoints has an odd length N, then the target viewpoint T refers to the (N+1)/2 -th intermediate viewpoint in the series. The predicted image quality of the series of intermediate images is then represented by the per-viewpoint predicted image quality parameter of the intermediate image corresponding to the target viewpoint T.

Optionally, the target viewpoint T may be pre-computed and provided to a rendering system or rendering device as meta-data complementing the original left image and the original right image. Note that the term 'complementing' in this context refers to 'coupled to' in the sense that the meta-data is provided together with the stereo data, and that the term 'complementing' has the same meaning at other places in this document.

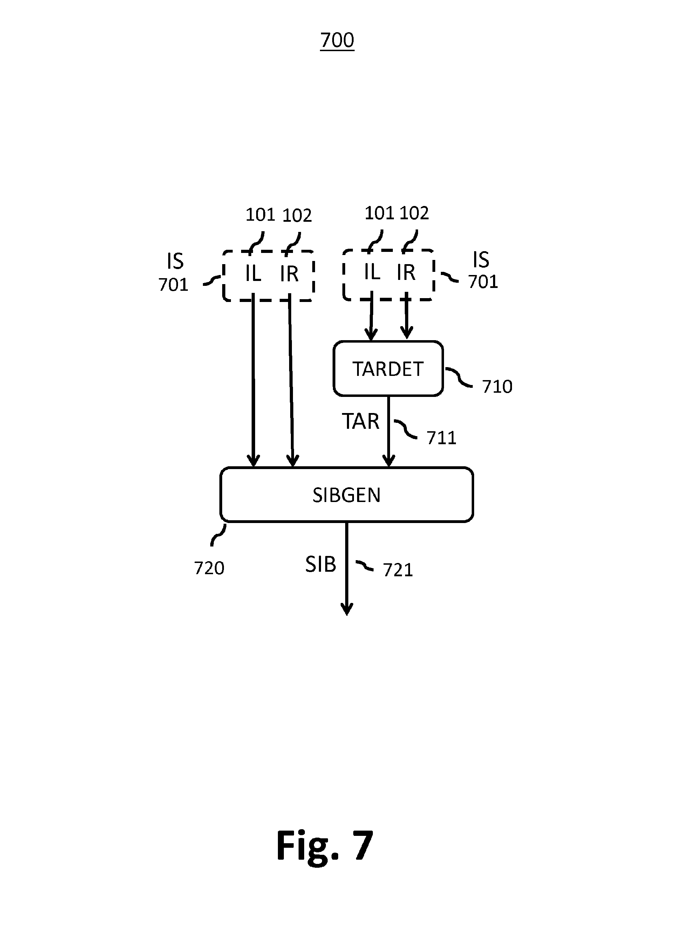

FIG.7 illustrates a method for generating a series of intermediate images from a stereo image, as described hereinabove. Inputs to the method is a stereo image IS 701 comprising the left image 101 and the right image 102. A determining process 710 determines the target viewpoint 711, and a generating process 720 SIBGEN generates a series of intermediate images SIB from the stereo image IS and for a series of intermediate viewpoints centered at the target viewpoint TAR.

The determining process TARDET 710 bases the determining of the target viewpoint on the predicted image quality of the series of intermediate viewpoints. The determining process comprises a predicting process (not shown in FIG.7) that predicts the image quality of the intermediate images for a series of intermediate viewpoints centered at the target viewpoint TAR. For example, the predicting process comprises a detail detector, in this case, detects a large the amount of detail in the stereo image. In this case, the predicting process concludes that the predicted image quality at the central stereo viewpoint CS is low and is therefore not a suitable target viewpoint, and consequently determines the original left viewpoint L as the target viewpoint TAR. Thus, the target viewpoint TAR is based on the predicted image quality of the series of intermediate images SIB that would result from the generating process SIBGEN if the series of intermediate viewpoints were centered at the target viewpoint TAR.

Optionally, the target viewpoint determining process 710 retrieves a (pre-computed) target viewpoint TAR as meta-data complementing the original stereo image 701. Optionally the target viewpoint determining process 710 uses only one of the left image IL and the right image IR for determining the target viewpoint. For example, as described above, if the predicted image quality parameter is computed using a detail detector, using only one of the left image IL and the right image IR is sufficient for detecting detail.

Optionally, the generating process 721 uses a generating function for such as illustrated in FIG.1, wherein the generating function generates an intermediate image from the stereo image IS for one of the intermediate viewpoint in the series of intermediate viewpoints. The generating process 721 uses the generating function to generate an intermediate image for each intermediate viewpoint in the series of intermediate viewpoints SB, thus generating the series of intermediate images SIB. The generating function uses disparity data for generating an intermediate image, and computes the disparity data from the stereo image IS. Optionally, the disparity data is not computed from the stereo image IS but instead retrieved as meta-data complementing the stereo image IS.

By means of the provision of meta-data comprising a target viewpoint, an optional mixing policy and optional depth/disparity data, a higher quality series of intermediate images can be rendered; i.e. a series of intermediate images for which the quality requirements have been approved/considered at the time of encoding.

Although in the text hereinabove, the target viewpoint and mixing policy primarily have been optimized individually, this need not be the case. In particular when the selection of the target view point and the mixing policy are evaluated by a panel of content reviewers, it is possible to evaluate a large number of alternatives and optimize both parameters combined. In this manner a selection can be made that both reduces visual artefacts, yet also complies with the director's preference.

Note that the target viewpoint TAR 711 of FIG.7 refers to the same matter as the target viewpoint T 504 of FIG.5.

A system arranged to perform the method of FIG.7 comprises a target viewpoint determining unit and a series generating unit. The target determining unit is arranged to execute the determining process TARDET. The series generating unit is arranged to execute the generating process SIBGEN. Input to the system is the stereo image IS. Output of the system is the series of intermediate images SIB.

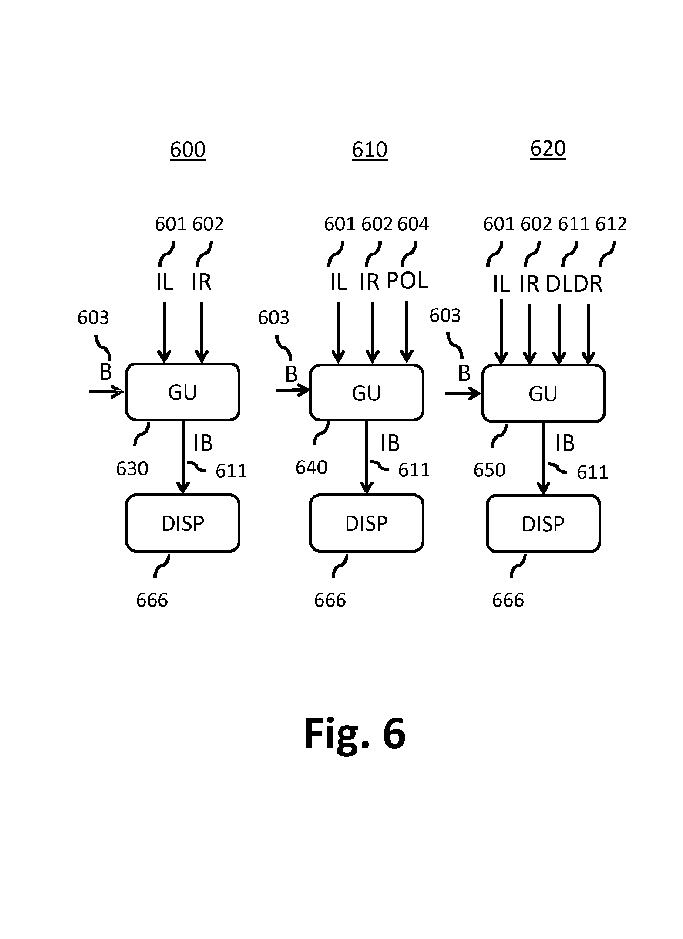

FIG.6 illustrates a system, in three configurations, for generating an intermediate image from stereo data and for showing the intermediate image on a display. The system is arranged for showing the generated intermediate image on a display. Generating units GU 630,640,650 are all arranged to generate an intermediate image IB 611, and are all arranged to receive the stereo images IL,IR and the intermediate viewpoint B 603. Display unit DISP 666 is arranged to show the intermediate image IB received from one of the generating units GU 630,640,650

FIG.6 illustrates the system 600 for generating the intermediate image IB 611 from a stereo image, and for showing the intermediate image IB 611 on the display DISP. Generating unit GU 630 is configured to generate the intermediate image IB 611 from the stereo images IL,IR, and to receive the original left image IL, the right image IR and the intermediate viewpoint B 603 at its input. Process GU 630 comprises the following functions:

(a) a left disparity computation function to receive the original left- and right images IL,IR, to compute the left disparity data DL from the left- and right images IL,IR, and to pass the computed the left disparity data DL to a left warping function; and
(b) a right disparity computation function to receive the original left- and right images IL,IR, to compute the right disparity data DR from the left- and right images IL,IR, and to pass the computed right disparity data DR to a right warping function; and
(c) the left warping function to receive the intermediate viewpoint B 603, the left image IL, and the left disparity data DL, and to generate the left intermediate image IBL, and to pass the left intermediate image IBL to a mixing function; and
(d) the right warping function to receive the intermediate viewpoint B 603, the right image IR, and the right disparity data DR, to generate the right intermediate image IBR, and to pass the right intermediate image IBR to the mixing function; and
(e) a policy determining function to receive the original left image IL and the original right image IR, and to determine the mixing policy based on a predicted image quality of an intermediate image generated by the system using that mixing policy, and to pass the mixing policy to the mixing function; and
(f) the mixing function to receive the left intermediate image IBL from the left warping function, to receive the right intermediate image IBR from the right warping function, to receive the intermediate viewpoint B 603, and to receive a mixing policy from a policy determining function, and to generate the intermediate image IB 611 by a mixing of the intermediate images IBL and IBR using the intermediate viewpoint B 603 and the mixing policy.

Optionally, the generating unit is a general purpose processor comprising software to perform the functions of the system. Optionally, the generating unit is an ASIC comprising dedicated application logic to perform the functions of the system.

Optionally, the system 600 comprises a single warping function, instead of the left warping function and the right warping function. The left warping function and the right warping function are identical and are configured to perform the same computations, and differ only in the inputs they process. The single warping function is identical to the left warping function or to the right warping function. The system 600 comprises the single warping function to compute the intermediate images IBL and IBR sequentially. For example, the single warping function is performed as follows. The single warping function first receives left data IL and DL, the intermediate viewpoint B, and generates the left intermediate image IBL, and passes the left intermediate image IBL to the mixing process. The single warping function then receives the right data IR and DR, the intermediate viewpoint B, and generates the right intermediate image IBR, and passes the right intermediate image IBR to the mixing process. The system 600 comprises the mixing function to perform the mixing once it has received all four inputs IBL, IBR, B, and POL. Optionally, the single warping function first generates the right intermediate image IBR and then the left intermediate image IBL in a time-sequential manner.

FIG.6 illustrates a system 610 configured for generating an intermediate image from a stereo image, and mixing policy, and to show the intermediate image on a display. The generating unit GU 640 is the same as unit GU 630, except for the following difference. Unit GU 640 does not comprise a policy determining function, and the mixing function is configured to receive the mixing policy POL 604 from the input of GU 640.

FIG.6 illustrates a system 620 configured for generating an intermediate image from stereo image, and from disparity data, and to show the intermediate image on a display. The generating unit GU 650 is the same as unit GU 630, except for the following difference. Generating unit GU 650 does not comprise a disparity processing function. The left warping function is configured to receive the left disparity DL 611 directly from the input. Likewise, the right warping function is configured to receive the right disparity DR 612 directly from the input.

Optionally, the display unit DISP is a multi-view display that shows the intermediate image IB in one of its display views.

Optionally, the display unit DISP is a stereo view display, and a head-tracking device is arranged to provide a left intermediate viewpoint BL and a right intermediate viewpoint BR to the generating unit GU. The generating unit GU is arranged to generate a new left image and a new right image using the respective intermediate views BL,BR and to provide the generated stereo image to the display unit DISP. The display unit DISP is arranged to show the stereo image, which is viewed by a viewer using stereo glasses arranged to enable the viewer to perceive a 3D image on the display unit DISP. The resulting system, comprising the generating unit GU and the display unit DISP, is arranged for a viewer to visually perceive a 3D image and to look behind foreground objects in the 3D image by making active head movements.

As an additional embodiment, a computer program product comprises instructions for causing a processor system to perform the determining process 710 and the generating process 720 of the method illustrated in FIG.7. For example, the processor system comprises a PC having a video graphics card and a general purpose processor and is connected to a multi-view display. The processor system converts a stereo image to a series of intermediate images, and drives the multi-view display for showing the series of intermediate images on the respective display views. The method of FIG.7 runs in software on a computer program on the general purpose processor and/or on the video graphics card. The stereo image is received from a source providing a stereo video sequence comprising video frames, each video frame comprising a left image and right image. The source may be the internet to which the processor system is connected, from which stereo video sequence is streamed to the processor system. The source may be a media-data carrier on which the computer program is stored. The media-data carrier may be a Blu-ray disc or a USB-storage device comprising a flash memory, for example.

As described hereinabove, the target view-point and optionally the mixing policy may be pre-computed and provided to a rendering system or rendering device as meta-data complementing the original stereo data.

The invention thus advantageously also enables a method of generating output stereo data for use in a method of generating a series of intermediate images 721 from a stereo image 701, the stereo image 701 comprising a left image 101 corresponding to a left viewpoint and a right image 102 corresponding to a right viewpoint the method of generating the output stereo data comprising determining a target viewpoint 711 based on predicted image quality of the series of intermediate images 721 corresponding to spatially consecutive viewpoints centered at the target viewpoint 711; and generating the output stereo data including meta-data descriptive of the determined target viewpoint 711.

The determining the target viewpoint may comprise computing a plurality of predicted image quality parameters for a respective plurality of target viewpoints, and determining the target viewpoint 711 corresponding to the predicted image quality parameter having the highest value among the plurality of predicted image quality parameters. Alternatively or additionally, the determining comprises measuring the amount of image detail in the stereo image 701 using a detail detector and computing the predicted image quality based on the measured amount of image detail. Alternatively or additionally, the determining 710 comprises detecting depth transitions in the stereo image 701 using a depth transition detector for predicting occlusion artifacts and determining the predicting image quality using the predicted occlusion artifacts. More alternatively, the method of generating output stereo data for use in a method of generating a series of intermediate images 721 from a stereo image 701 further comprises determining a mixing policy POL for use in generating a series of intermediate image 721 and further comprises including the determined mixing policy POL in the output stereo data as meta-data descriptive of the mixing policy POL. The output stereo data as described hereinabove can be used to enable an improved generation of a series of intermediate images 721, compared to the prior art, in that it enables a system arranged for generating a series of intermediate images 721 to use the target view point and/or the mixing policy (when provided), to enable the generation of a series of intermediate images that satisfy requirements that were established at the time of encoding of the meta-data.

The invention also enables a system for generating output stereo data for use in a system of generating a series of intermediate images 721 from a stereo image 701, the stereo image 701 comprising a left image 101 corresponding to a left viewpoint and a right image 102 corresponding to a right viewpoint the system for generating the output stereo data comprising a generating unit arranged for determining a target viewpoint 711 based on predicted image quality of the series of intermediate images 721 corresponding to spatially consecutive viewpoints centered at the target viewpoint 711; and generating the output stereo data including meta-data descriptive of the target viewpoint 711.

The determining by the generating unit may comprise computing a plurality of predicted image quality parameters for a respective plurality of target viewpoints, and determining the target viewpoint 711 corresponding to the predicted image quality parameter having the highest value among the plurality of predicted image quality parameters. Alternatively or additionally, the determining by the generating unit may comprise measuring the amount of image detail in the stereo image 701 using a detail detector and computing the predicted image quality based on the measured amount of image detail. Alternatively or additionally, the determining by the generating unit comprises detecting depth transitions in the stereo image 701 using a depth transition detector for predicting occlusion artifacts and determining the predicting image quality using the predicted occlusion artifacts. More alternatively, the system of generating output stereo data for use in a system of generating a series of intermediate images 721 from a stereo image 701 further comprises the generating unit determining a mixing policy POL for use in generating a series of intermediate image 721 and is further arranged to including the determined mixing policy POL during the generating of the output stereo data as meta-data descriptive of the mixing policy POL.

The output stereo data as described hereinabove can be used to enable an improved generation of a series of intermediate images 721, compared to the prior art, in that it enables a system arranged for generating a series of intermediate images 721 to use the target view point and/or the mixing policy (when provided), to enable the generation of a series of intermediate images that satisfy requirements that were established at the time of encoding of the meta-data.

The target viewpoint and/or mixing policy information/meta-data that is included in the output stereo data may comprise information that describes the position of the target viewpoint with reference to the stereo-pair, or in another manner that allows the rendering to generate the proper series of intermediate images.

The meta-data indicative of the target viewpoint orientation may be relative, i.e. referring the target viewpoint to the position of the left and right viewpoint of the stereo pair (comparable to the representation of T used in Fig. 5).

An example of a simple binary representation is using 3 bits to indicate the target viewpoint, here 000 could correspond to L, 100 to half way between L & R, 001 to 1/8 from L en 7/8 from R, etc. If a frame does not contain this metadata it would use the last available target viewpoint indication from previous frames.

Alternatively the orientation could be represented as an absolute orientation, for example with reference to the display surface orientation or the display surface normal.

In case the stereo-pairs are part of a video sequence the target viewpoint as described herein above may vary over time. As a result the target viewpoint may be provided on a per frame basis, or could be provided in an aggregated form video structure comprising multiple frames; such per GOP (a level of granularity related to the coding standard) or even at a higher granularity per shot/scene (a level of granularity that allows addressing requirements such as continuity at a shot level).

The latter further allows the target view orientation to be described at a higher level of abstraction such as by means of a functional description in the form of a piece wise-linear representation or spline representation indicating the orientation of the target viewpoint over time.

When the mixing policy information, or mixing policy meta-data, is included in the output stereo data, it may comprise information ranging from a mixing factor or blend factor, a asymmetry parameter, a target viewpoint T description, a view position allocation for use in driving a multi-view display as described hereinabove. This information may be provided on a per frame basis, or preferably in the form of a lookup-table per scene, linking the parameters to respective frames within the scene, or in the form of a functional description, using e.g. a piece-wise linear, or spline based representation, the representation allowing the playback device to derive the appropriate parameters for the frames from the functional description.

The output stereo data generated in accordance with the above method may further include further meta-data and/or information for use in rendering on a multi-view display device.

The output stereo data as generated using a method or system as provided hereinabove may be output as a signal for broadcast, or as a signal for transfer over a digital network, such as a local network, a companies, intra-net, or the internet.

The signal as described hereinabove can be used to enable an improved for generation a series of intermediate images 721 from a stereo image. As described hereinabove the target view information may be provided for a single stereo image pair, or for a sequence of stereo image pairs in a stereo video sequence. The meta-data descriptive of the target viewpoint may further be complemented with information such as a mixing policy, and/or depth/disparity data (at full resolution or at reduced resolution) and/or further parameters that may be used in generating the series of intermediate images.

Notably the meta-data descriptive of the target viewpoint is data that allows centering of the series of intermediate images at the target viewpoint. For example, in case of an even number of views being present in the series of intermediate images (implying that there are two center views), then the position of the left center view with respect to the original left and right images (and if not fixed the distance between the respective intermediate images), suffices to determine the distribution of the series of intermediate images. Alternatively the (angular) position of the left center view and the right center view could be used (and the distance between the further views in the series could be inferred based on the distance between the left center and the right center image).

More alternatively when the distance between the respective views is pre-defined with respect to the left and right stereo image, then it suffices to encode the position of the left (or right) center view with respect to the left and right images of the stereo pair. As will be clear to those skilled in the art many different data representations may be used for the data determining the target viewpoint at which the series of intermediate images is centered.

The signal may be recorded on a digital data carrier such as an optical data carrier in the form of a Blu-ray disc, or an equivalent optical data carrier, or on an electronic non-volatile medium such as a flash or solid-state storage device. More information on the Blu-ray Disc Format can be found here:

http://blu-raydisc.com/assets/Downloadablefile/BD-ROM-AV-WhitePaper_110712.pdf hereby incorporated by reference. Preferably the meta-data associated with the view rendering is included according to the standard as decoding information, in at least one of a user data message; a signaling elementary stream information [SEI] message (particularly useful when frame accurate or GOP accurate encoding is required); an entry point table; or an XML based description.

The advantage of distributing the output stereo data over the original input stereo data 105 is that at the author side the content typically is available in full and as a result more expensive and/or time-consuming algorithms (or user assisted algorithms) may be used to determine a suitable target view point and/or mixing policy.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. Method (700) for generating a series of intermediate images (721) from a stereo image (701), the stereo image (701) comprising a left image (101) corresponding to a left viewpoint and a right image (102) corresponding to a right viewpoint, the series of intermediate images (721) corresponding to spatially consecutive viewpoints in a viewpoint range that comprises at least one of the left viewpoint and the right viewpoint,
the method (700) comprising:

- determining (710) a target viewpoint (711) based on predicted image quality of the series of intermediate images (721) corresponding to spatially consecutive viewpoints centered at the target viewpoint (711); and
- generating (720) the series of intermediate images (721) from the stereo image (701) for spatially consecutive viewpoints centered at the target viewpoint (711).

2. Method as claim 1, wherein the determining (710) comprises retrieving data for determining the target viewpoint (711) from meta-data complementing the stereo image. (701)

3. Method as claim 2, wherein
the data for determining the target viewpoint (711) comprises the target viewpoint (711)

4. Method as claim 1, wherein the determining (710) comprises computing a plurality of predicted image quality parameters for a respective plurality of target viewpoints, and determining the target viewpoint (711) corresponding to the predicted image quality parameter having the highest value among the plurality of predicted image quality parameters.

5. Method as claim 1, wherein the determining (710) comprises

- measuring the amount of image detail in the stereo image (701) using a detail detector and
- computing the predicted image quality based on the measured amount of image detail.

6. Method as claim 1, wherein the determining (710) comprises detecting depth transitions in the stereo image (701) using a depth transition detector for predicting occlusion artifacts and
determining the predicting image quality using the predicted occlusion artifacts.

7. Method as claim 1, wherein the generating the series of intermediate images (721) comprises generating subsequent series of intermediate images (721) from respective subsequent frames of a stereo view video sequence, each of the respective subsequent frames comprising a stereo image (701).

**8.** Method as claim 7, wherein the determining (710) comprises:

- determining a first target viewpoint (711) for first generating a first series of intermediate images (721) from a first frame at a first instance,
- determining a second target viewpoint (711) for second generating a second series of intermediate images (721) from a second frame at a second instance, and
- determining a third target viewpoint (711) for third generating a third series of intermediate images (721) from a third frame at a third instance,

the third instance occurring after the first instance and before the second instance, and the third target viewpoint (711) positioned in between the first target viewpoint (711) and the second target viewpoint (711), enabling the target viewpoint (721) to shift gradually over time.

**9.** Method as claim 7, wherein the determining (710) comprises:

- determining a first target viewpoint (711) for first generating a first series of intermediate images (721) from a first frame at a first instance,
- determining a second target viewpoint (711) for second generating a second series of intermediate images (721) from a second frame at a second instance,

the determining a second target viewpoint (711) comprising

determining an occurrence of a scene change between the first instance and the second instance and determining the second target viewpoint (711) in dependence of the occurrence of the scene change, the second target viewpoint (711) being different from the first target viewpoint (711).

**10.** Method as claim 9, wherein the determining an occurrence of a scene change comprises: retrieving the occurrence from meta-data complementing the stereo image (701).

**11.** System arranged for generating a series of intermediate images (721) from a stereo image (701), the stereo image (701) comprising a left image (102) corresponding to a left viewpoint and a right image (102) corresponding to a right viewpoint, the series of intermediate images (721) corresponding to spatially consecutive viewpoints in a viewpoint range that comprises at least one of the left viewpoint and the right viewpoint, the system comprising:

- a determining unit for determining (710) a target viewpoint (711) based on predicted image quality of the series of intermediate images corresponding to spatially consecutive viewpoints centered at the target viewpoint (711); and
- a generating unit for generating (720) the series of intermediate images (721) from the stereo image (701) for spatially consecutive viewpoints centered at the target viewpoint (711).

**12.** System as claim 11, wherein the series of intermediate images (721) is for showing on an multi-view display.

**13.** A computer program product comprising instructions for causing a processor system to perform the method according to claim 1.

**14.** Video data comprising a stereo image (701), the stereo image (701) comprising a left image (102) corresponding to a left viewpoint and a right image (102) corresponding to a right viewpoint, the video data comprising meta-data for:

- determining a target viewpoint based on predicted image quality of a series of intermediate images corresponding to spatially consecutive viewpoints centered at the target viewpoint (711); and
- generating (720) the series of intermediate images (721) from the stereo image (701) for the spatially consecutive viewpoints centered at the target viewpoint (711).

**15.** A media-data carrier comprising the video data of claim 14.

<u>100</u>

**Fig. 1a**

**Fig. 1b**

**Fig. 1c**

Fig. 2

300

AL
301

AR
302

322    1

A
304

321    0

311    0    313    0.5    312    1
L    303    R

# Fig. 3a

350

351    362

A    361    352

0    1
L    B    R

# Fig. 3b

400

410        420        430

401        402        403        404

# Fig. 4

500

**Fig. 5**

Fig. 6

700

101 102       101 102

IS                            IS
701   IL   IR     IL   IR   701

TARDET   710

TAR   711

SIBGEN

720       SIB   721

**Fig. 7**

Europäisches
Patentamt

European
Patent Office

Office européen
des brevets

**EUROPEAN SEARCH REPORT**

Application Number

EP 13 15 4257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2009/125988 A2 (POSTECH ACAD IND FOUND [KR]; JEONG HONG [KR]; KIM JANG MYOUNG [KR]; PA) 15 October 2009 (2009-10-15) | 1,4,6,7, 11-15 | INV. H04N13/00 |
| Y | * page 4, paragraph 54 - page 13, paragraph 122; figures 3-5 * | 2,3,5, 8-10 | |
| X | EP 2 348 733 A2 (LG ELECTRONICS INC [KR]) 27 July 2011 (2011-07-27) | 1,4,6,7, 11-15 | |
| Y | * page 5, paragraph 47 - page 6, paragraph 51; figure 2 * <br> * page 7, paragraph 64 - page 11, paragraph 103; figures 4-7 * | 2,3,5, 8-10 | |
| Y | WO 2012/007867 A1 (KONINKL PHILIPS ELECTRONICS NV [NL]; NEWTON PHILIP STEVEN [NL]; KROON) 19 January 2012 (2012-01-19) * page 8, line 20 - page 9, line 30; figure 1 * | 2,3 | |
| Y | US 2012/268561 A1 (SEKI YUKINAGA [JP] ET AL) 25 October 2012 (2012-10-25) * page 4, paragraph 54 - page 5, paragraph 58; figure 1 * | 5 | TECHNICAL FIELDS SEARCHED (IPC) H04N G06T |
| Y | US 6 327 381 B1 (ROGINA PETER R [US] ET AL) 4 December 2001 (2001-12-04) * column 31, line 11 - column 32, line 28; figure 26 * | 8-10 | |

The present search report has been drawn up for all claims

| Place of search | Date of completion of the search | Examiner |
|---|---|---|
| Munich | 31 May 2013 | Dinov, Vassil |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 15 4257

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2013

| Patent document cited in search report | | | Publication date | Patent family member(s) | | | Publication date |
|---|---|---|---|---|---|---|---|
| WO 2009125988 | A2 | | 15-10-2009 | EP | 2263383 | A2 | 22-12-2010 |
| | | | | JP | 2011519209 | A | 30-06-2011 |
| | | | | KR | 20090107748 | A | 14-10-2009 |
| | | | | US | 2011026809 | A1 | 03-02-2011 |
| | | | | WO | 2009125988 | A2 | 15-10-2009 |
| EP 2348733 | A2 | | 27-07-2011 | EP | 2348733 | A2 | 27-07-2011 |
| | | | | KR | 20110088515 | A | 03-08-2011 |
| | | | | US | 2011255592 | A1 | 20-10-2011 |
| | | | | WO | 2010050728 | A2 | 06-05-2010 |
| WO 2012007867 | A1 | | 19-01-2012 | TW | 201215102 | A | 01-04-2012 |
| | | | | WO | 2012007867 | A1 | 19-01-2012 |
| US 2012268561 | A1 | | 25-10-2012 | US | 2012268561 | A1 | 25-10-2012 |
| | | | | WO | 2012117462 | A1 | 07-09-2012 |
| US 6327381 | B1 | | 04-12-2001 | US | 6327381 | B1 | 04-12-2001 |
| | | | | US | 2002015522 | A1 | 07-02-2002 |
| | | | | US | 2002110275 | A1 | 15-08-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 201100268009 A1
- US 5929859 A
- US 7689031 B
- US 6625304 B
- US 6985604 B
- US 6064424 A

**Non-patent literature cited in the description**

- **ALAN F. SMEATON.** Video shot boundary detection: Seven years of TRECVid activity. *Computer Vision and Image Understanding,* 2010, vol. 114, 411-418